(19) Europäisches Patentamt
European Patent Office
Office européen des brevets

(11) **EP 1 744 174 A1**

(12) **EUROPEAN PATENT APPLICATION**

(43) Date of publication:
**17.01.2007 Bulletin 2007/03**

(51) Int Cl.:
*G01S 7/52* (2006.01)     *G01S 15/89* (2006.01)

(21) Application number: **05106377.4**

(22) Date of filing: **12.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Mitel Networks Corporation**
**Ottawa, Ontario K2K 2W7 (CA)**

(72) Inventors:
• **Moquin, Philippe**
 **Kanata, Ontario K2K 2H7 (CA)**
• **Dedieu, Stephane**
 **Ottawa, Ontario K2B 6Y8 (CA)**

(74) Representative: **Walaski, Jan Filip et al**
 **Venner Shipley LLP**
 **20 Little Britain**
 **London EC1A 7DH (GB)**

(54) **Oversampled phased array beamformer**

(57)     A phased array beamformer is provided, comprising a plurality of sensors arranged in an array, a plurality of samplers for generating respective oversampled signals, a digital filter for performing delay and sum filtering of the oversampled signals to generate a beamformed output signal, and a decimator for downsampling the beamformed output signal to generate a Nyquist sample rate signal at a predetermined look direction. The delay and sum beamforming operation is performed at the oversampling frequency, preferably within a $\Delta\Sigma$ modulator scheme.

**Figure 4**

EP 1 744 174 A1

## Description

### Field Of The Invention

The present invention relates generally to sensor arrays, and more particularly to a phased array beamformer operating on oversampled signals from a delta-sigma ($\Delta\Sigma$) modulator.

### Background Of The Invention

Microphone arrays are well known in the art for applications such as speaker phones and conference units. Microphone arrays generally comprise two or more microphones whose signals are digitised by an Analog-to-Digital Converter (ADC) at a sampling rate of interest, and a digital filter for synthesising these signals to create a digital beamformer. The simplest filtering technique is the ubiquitous "delay and sum" beamformer which sums the inputs together with an appropriate delay to obtain a desired beamshape and direction. A significant disadvantage of this technique is that the delay resolution is determined by the sampling frequency of the ADC, which, in general, is limited to the Nyquist sampling rate. Therefore, complex filters such as FIR filters with multiple taps (80 or more) are generally used.

It is common in the art to use an 8 element linear free field array for conventional telephony wherein the maximum frequency of interest is about 3500 Hz. Assuming the speed of sound is 350m/s, then the maximum inter-element spacing would be 50mm to avoid spatial aliasing ($\lambda/2$). The system is sampled, with an analogue to digital converter, at a typical telephony rate of 8 kHz (Fs). Using a simple delay and sum beamformer, then only two look angles can be synthesised: $\theta = 0°$ and $60°$, making an end fire configuration ($\theta = 90°$) impossible. To achieve an end fire configuration, either the spacing must be reduced to about 43 mm or the sample rate must be increased. Either of these solutions contributes to undesirable cost and/or complexity.

### Summary Of The Invention

According to the present invention, a delay and sum beamformer is provided with accurate steering angle but without significant increase in complexity. It is an object of an aspect of the invention to provide a phased array with sub-millimetre resolution.

Most modem Analog-to-Digital converters (ADCs) are of the oversampling delta-sigma type. For telephony applications, delta-sigma modulators typically oversample sample at M=256 times (i.e. 256 * 8 kHz = 2,048 kHz) and then down sample to the 8kHz bandwidth. This is generally accomplished within a single physical device. However, some such devices provide access to the oversampled signal (see US Pat 5465270 and US Pat. Application 2003/0235315).

The inventors of the present invention have recognised that access to the oversampled signal allows for construction of a low-cost delay and sum beamformer with much finer resolution in terms of time delay than is possible with the prior art. More particularly, a phased array beamformer is provided by taking the delta modulation output of signals from an array of sensors, performing delay and sum beamforming of the signals, and then down sampling to provide a beamformed signal at the required Nyquist sample rate.

### Brief Description Of The Drawings

Embodiments of the present invention will now be described more fully with reference to the accompanying drawings in which:

Figure 1 is a plot of steering angle error for various sample rates;
Figure 2 is a block diagram illustrating a prior art delay and sum beamformer;
Figure 3 is a block diagram illustrating a "digital microphone" implementation of prior art delay and sum beamformer; and
Figure 4 is a block diagram of a delay and sum beamformer according to the present invention.

### Detailed Description Of The Preferred Embodiments

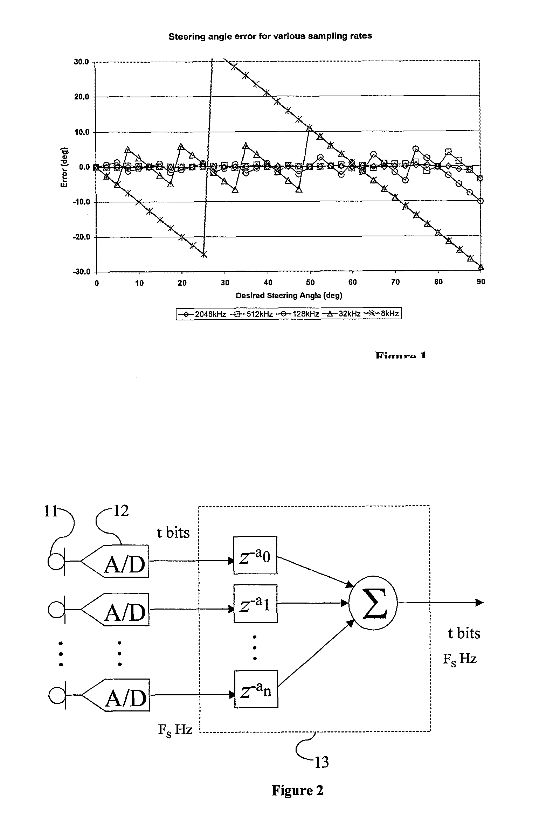

In Figure 1, beamformer steering angle error is plotted against desired steering angle. It will be appreciated that in order to achieve an error less than 5° one needs a sampling rate of 128kHz. In practice, however, it is more effective to use complex beamformers at 8kHz sampling rates.

To explain the operation of a conventional beamformer, consider the simplest embodiment of a free field uniform linear array (ULA) shown in Figure 2 with a plurality of elements 11. It will be understood that there are many other geometrical array shapes that make a mathematical description more complex, but well within the skill of those skilled in the art of sensor arrays. In the far field, which represents the easiest physical explanation, plane waves (far field assumption) impinge on the array 11 and are not affected by it (free-field assumption). In this case, all the inputs from the sensor elements 11 ($d_0$, $d_1$ ... $d_n$) may be digitised and summed (with either no or equal delay) via analogue-to-digital converters 12 to obtain a beam perpendicular to the array ($\theta = 0°$), which is called broadside. However, as is well known in the art, the array can be "steered" by "phasing" the elements and then summing them, as represented by delay and sum beamformer 13.

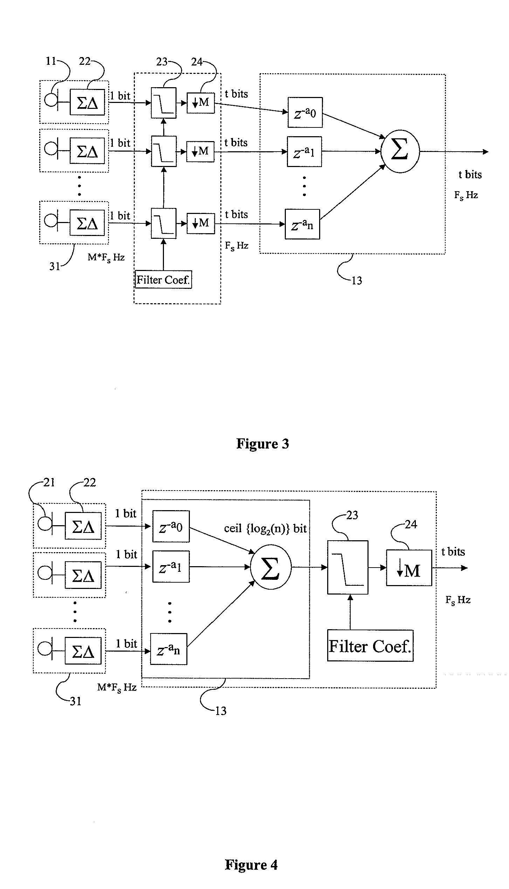

In Figure 2 and 3, this is shown by delay elements:

$$Z^{-a_0}, Z^{-a_1} ... Z^{-a_n}$$

The beam width is dependent on the wave-

length ($\lambda$), the inter-element spacing (d) and the number of elements (n). The steering angle is determined by the inter-element delay ($\tau$), the speed of the wave ($c$) and the inter-element spacing ($d$):

$$\sin\theta = c\tau/d$$

Spatial aliasing in a discrete line array dictates the minimum inter-element spacing which is most critical at $\theta = 90°$, where $d \leq \lambda/2$. In an analogue system $\tau$ is varied to accommodate the desired steering angle. In digital systems $\tau$ can only take on values that are integer multiples of the sample time (1/Fs). For the 8-element structure discussed above, this means that in a telephony system with 50mm inter-element spacing the typical 8 kHz sampling frequency creates significant limitations. Schemes such as "shading" the array address this problem by use of FIR filters to perform the beamforming. Another scheme is to resample the data at a higher sample rate, perform the delay and sum at that higher rate and then downsample back to the initial sampling rate (see US Patent 6312381). These solutions are complex and therefore costly to implement.

As discussed above, a typical application of oversampled delta-sigma modulators (such as described in US Pat 5465270 and US Pat. Application 2003/0235315) is in a microphone array, as illustrated in Figure 3, wherein like references are used to denote like elements in Figure 2. In this case the microphone element 11 and the delta-sigma modulator 22 are packaged together and generally referred to as "digital microphone" 31. The output of microphone 31 is a high-speed digital signal that is immune to digital noise normally found in prior art arrangements such as shown in Figure 2. Each input is filtered at 23 and then decimated at 24 to achieve a desired resolution (t bits) and sampling frequency (Fs). The microphones 31 can be implemented within a single device or a plurality of devices. The outputs of microphones 31 are then supplied to the same type of beamformer 13 discussed above in connection with Figure 2. Integrating the digital circuitry of Figure 3 is reasonably easy and results in significant cost savings.

Figure 4 shows an embodiment of the present invention. In contrast with the prior art arrangement of Figure 3, the delay and sum beamformer 13 is placed before the filter 23 and decimator 24. A plurality of sensors 11 ($d_0$, $d_1$ ... $d_n$) and delta-sigma modulators 22 receive and digitise input signals to the array. In the preferred embodiment, each of the sensors 31 is a "digital microphone" comprising an electret microphone element 11 and delta-sigma modulator 22, such as a Zarlink ZL70190 4th order $\Delta\Sigma$ modulator (see published US patent application 2003/0235315). The signal is sampled at a clock rate of 2,048 kHz (M=256 times 8 kHz) and the output is a single bit. The single-bit delta modulator outputs are fed to the aforementioned delay elements (preferably a shift register with taps at the appropriate length ($a_x$)) to obtain a desired delay. In the preferred embodiment, a shift register of length 180 permits steering from $\theta = 0°$ to 90°. The outputs are then summed together and presented to the filter 23 and decimator 24. For an 8-element array (N=8) this sum can be adequately represent by a 3 bit word (ceiling $\{\log_2(N)\}$). The filter and decimator design is therefore solved as if the modulator was a 3-bit 4th order integrator to obtain 16 (t=16) bits of resolution at a sampling frequency (Fs) of 8kHz.

A significant advantage of the present invention relates to its hardware implementation, which permits configuration as an application specific integrated circuit (ASIC) (e.g. an FPGA, semi-custom chip, etc.) The complexity of the chip is increased by having to operate the summer and the delay lines at the higher sample rate (M*Fs). However, this complexity is offset by the elimination of eight (N=8) 16 bit FIR filters (typically about 80 taps) running at Fs, or the undesirable alternative of an upsampling / downsampling delay and sum structure which would typically be even more complex.

It is also possible to implement the structure of the present invention in a general purpose DSP if it is more expedient or economical to do so. Often these devices have variable length FIFO buffers that can be used as delay elements, thereby speeding up the operation.

As one skilled in the art will appreciate, the preferred embodiment is for illustration purposes only and the principles of the invention can be used in any phased array where over-sampling ADCs are used, such as in ultra-sound medical devices, radar, sonar, etc.

Additional embodiments and modifications will be understood by a person of ordinary skill in the art.

**Claims**

1. A phased array, comprising:

    a plurality of sensors arranged in an array;
    a plurality of low bit resolution high speed samplers connected to said sensors for generating respective oversampled signals;
    a beamformer for performing delay and sum filtering of said oversampled signals to generate a beamformed output signal; and
    a decimator for downsampling said beamformed output signal to generate a Nyquist sample rate signal at a predetermined look direction.

2. The phased array of claim 1, wherein each of said low bit resolution high speed samplers is implemented as a $\Delta\Sigma$ modulator.

3. The phased array of claim 1, wherein said sensors are microphones.

3. The phased array of claim 1, wherein said sensors are ultra-sound transducers.

**4.** The phased array of claim 1, wherein said sensors are radar receivers.

**5.** The phased array of claim 1, wherein said sensors are sonar receivers.

**6.** The phased array of claim 1, wherein said beamformer comprises a shift register with a plurality of signal taps and an adder for summing delayed signals output from said taps to generate said beamformed output signal with look direction from $\theta = 0°$ to 90°.

**7.** The phased array of claim 2, wherein said beamformer, filter and decimator are implemented within an application specific integrated circuit (ASIC).

**8.** The phased array of claim 2, wherein said beamformer, filter and decimator are implemented within a general purpose Digital Signal Processor (DSP).

Steering angle error for various sampling rates

Figure 1

**Figure 2**

**Figure 3**

**Figure 4**

6

European Patent
Office

**EUROPEAN SEARCH REPORT**

Application Number

EP 05 10 6377

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 015, no. 306 (C-0856), 6 August 1991 (1991-08-06) -& JP 03 114449 A (YOKOGAWA MEDICAL SYST LTD), 15 May 1991 (1991-05-15) * abstract; figures 1-4 * * page 303 * ----- | 1-8 | G01S7/52 G01S15/89 |
| X | US 5 461 389 A (DEAN ET AL) 24 October 1995 (1995-10-24) * abstract; figures 3,4 * * column 1, line 6 - column 6, line 40 * ----- | 1-8 | |
| X | US 5 203 335 A (NOUJAIM ET AL) 20 April 1993 (1993-04-20) * abstract; figures 1,5 * * column 1, lines 6-12 * * column 3, line 26 - column 4, line 57 * * column 8, line 65 - column 11, line 14 * ----- | 1-8 | |
| A | US 2003/231125 A1 (FREEMAN STEVEN R ET AL) 18 December 2003 (2003-12-18) * paragraphs [0003] - [0007] * ----- | 1-8 | TECHNICAL FIELDS SEARCHED (Int.Cl.7) G01S |

The present search report has been drawn up for all claims

| Place of search | Date of completion of the search | Examiner |
|---|---|---|
| Munich | 11 October 2005 | Reuss, T |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 05 10 6377

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2005

| Patent document cited in search report | | Publication date | Patent family member(s) | | Publication date |
|---|---|---|---|---|---|
| JP 03114449 | A | 15-05-1991 | JP | 2832619 B2 | 09-12-1998 |
| US 5461389 | A | 24-10-1995 | AT | 189841 T | 15-03-2000 |
| | | | DE | 69230692 D1 | 23-03-2000 |
| | | | DE | 69230692 T2 | 08-06-2000 |
| | | | DK | 617796 T3 | 24-07-2000 |
| | | | EP | 0617796 A1 | 05-10-1994 |
| | | | ES | 2141730 T3 | 01-04-2000 |
| | | | WO | 9312440 A1 | 24-06-1993 |
| | | | GB | 2276495 A | 28-09-1994 |
| | | | JP | 7502120 T | 02-03-1995 |
| | | | JP | 3258010 B2 | 18-02-2002 |
| US 5203335 | A | 20-04-1993 | EP | 0559419 A1 | 08-09-1993 |
| | | | JP | 6014928 A | 25-01-1994 |
| US 2003231125 | A1 | 18-12-2003 | NONE | | |

For more details about this annex : see Official Journal of the European Patent Office, No. 12/82

**REFERENCES CITED IN THE DESCRIPTION**

**Patent documents cited in the description**

- US 5465270 A
- US 20030235315 A

- US 6312381 B